# EUROPEAN PATENT APPLICATION

(11) **EP 3 660 665 A1**
(43) Date of publication of application: **03.06.2020**
(21) Application number: 19211412.2
(22) Date of filing: 26.11.2019
(51) Int. Cl.: G06F 8/00, G06Q 10/06

(54) **BUSINESS PROCESSING METHOD, APPARATUS, DEVICE AND SYSTEM USING THE SAME, AND READABLE STORAGE MEDIUM OF THE SAME**

(30) Priority: 27.11.2018 CN 201811425248
(71) Applicant: Delta Electronics, Inc., Guishan Industrial Zone 33370 Taoyuan City, Taiwan (CN)
(72) Inventor: YAN, Xinyuan, Taoyuan City, TAIWAN, 33370 (CN)
(74) Representative: Cabinet Beau de Loménie

(57) **Abstract**

The present disclosure discloses a method of business processing, an apparatus, a device and a system using the method, and a readable storage medium of the same. The method includes: when a first trigger event is received by a process management container, executing (S102) a process management component loaded in the process management container; and when the process management component is executed, reading (S104) a pre-configured business processing file, and according to a business processing model predefined in the business processing file, performing an operation for respective tasks in the business processing model based on a business process management engine, wherein the operation includes: sending a second trigger event to a business processing container, to invoke a business processing component that is loaded in the business processing container and bound to the task. The method may realize the integration of event-driven systems with BPM.

## Description

### TECHNICAL FIELD

The present disclosure relates to the field of business modeling technology for event-driven system, and more particularly, to a method of business processing, an apparatus, a device and a system using the method, and a readable storage medium of the same.

### BACKGROUND

Distributed event-driven systems combined with business modeling enable a high degree of loose coupling of services, and have more retractility and expandability than traditional systems. Various business units of the distributed event-driven system are distributed on various nodes in the system and may be triggered by events, and then to be executed. Therefore, in principle, there is no central control unit, and the main way of business modeling is event-driven.

BPM (Business Process Management), as a method of modeling business process, provides comprehensive business modeling tools and semantic support, but it is mainly applied in business processing modeling, while a business process management engine is responsible for execution of entire business process.

If the BPM is integrated into a distributed event-driven system, the BPM may be used to implement functions such as timer and exception handling that are difficult to be implemented in the distributed event-driven system, and at the same time, it may have the characteristic of loose coupling of event-driven architecture. However, because BPM is mainly oriented to business processing modeling, and the business process management engine controls the execution of the entire business process, while the distributed event-driven system is mainly oriented to event modeling, how to effectively integrate the two to provide a system of business processing having both the event-driven architecture and the BPM is a technical problem to be solved in the present disclosure.

The above information disclosed in the background section is only for enhancing the comprehension to the background of the present disclosure, and thus may include information that does not constitute prior art known to those ordinary skilled in the art.

### SUMMARY

The present disclosure provides a method of business processing, an apparatus, a device and a system using the method, and a readable storage medium of the same, which can realize integration of an event-driven system with BPM.

Additional aspects and advantages of the present disclosure will become apparent from the following detailed description, or may be partly learned from practice of the disclosure.

According to an aspect of the present disclosure, a method of business processing is provided, including: when a first trigger event is received by a process management container, executing a process management component loaded in the process management container; and when the process management component is executed, reading a pre-configured business processing file, and according to a business processing model predefined in the business processing file, performing an operation for respective tasks in the business processing model based on a business process management engine, wherein the operation includes: sending a second trigger event to a business processing container, to invoke a business processing component that is loaded in the business processing container and bound to the task.

According to an embodiment of the present disclosure, the method further includes: parsing a pre-configured task interface file by the process management component, to generate interfaces to be invoked corresponding to the respective tasks.

According to an embodiment of the present disclosure, the method further includes: registering, by the business processing container, a business processing component to be loaded to a registration server, so as to register the interface provided by the business processing component to the registration server.

According to an embodiment of the present disclosure, the method further includes: according to interface information in the registration server which is provided by the respective business processing components, generating stub objects corresponding to the respective business processing components by the process management container; respectively assigning, by the process management container, the stub objects corresponding to the respective business processing components to the corresponding interfaces to be invoked; and binding, by the process management component, the tasks corresponding to the respective interfaces to be invoked with the corresponding business processing components.

According to an embodiment of the present disclosure, the method further includes: when the second trigger event is received by the business processing container, executing the business processing component.

According to an embodiment of the present disclosure, the method further includes: after the business processing component is executed, sending, by the business processing container, an execution result to the stub object.

According to an embodiment of the present disclosure, the method further includes: receiving and subscribing, by the business processing container, a message topic dynamically allocated for the business processing container by the registration server, wherein the message topic is used to bind the respective business processing component with the stub object corresponding to the respective business processing component.

According to an embodiment of the present disclosure, the process management component and the business processing components are configured in a distributed event-driven system.

According to another aspect of the present disclosure, an apparatus of business processing is provided, including: management component invoking module, configured to, when a first trigger event is received by a process management container, execute a loaded process management component of the process management container; and management component executing module, configured to, when the process management component is executed, reading a pre-configured business processing file, and according to a business processing model predefined in the business processing file, and perform an operation for respective tasks based on a business process management engine, wherein the operation includes: sending a second trigger event to a business processing container, to invoke a business processing component that is loaded in the business processing container and bound to the task.

According to still another aspect of the present disclosure, a computer device is provided, including: a memory, a processor and executable instructions stored in the memory and being executable in the processor, wherein, when the processor executes the executable instructions, the above method is realized.

According to still another aspect of the present disclosure, a computer readable storage medium is provided, having a computer executable program stored thereon, wherein, when the computer executable program is executed by a processor, the above method is realized.

According to still another aspect of the present disclosure, a system of processing distributed event-driven business process is provided, including: a first processing device, wherein the first processing device includes: a first memory, a first processor and first executable instructions stored in the first memory and being executable in the first processor, wherein the first processor device is configured to realize the above method when the first processor executes the first executable instructions.

According to an embodiment of the present disclosure, the system further includes: a registration server; wherein the first processor device is configured to realize the above method when the first processor executes the first executable instructions.

According to an embodiment of the present disclosure, the system further includes: a second processing device, wherein the second processing device includes: a second memory, a second processor and second executable instructions stored in the second memory and being executable in the second processor, wherein the second processor device is configured to realize the above method when the second processor executes the second executable instructions.

According to the method of business processing provided by embodiments of the present disclosure, the BPM is integrated into the process management component, and through the configuration of the business processing file and the respective interfaces to be invoked in the respective tasks, the respective BPM tasks are bound to the respective business processing components through the interfaces to be invoked thereof, thereby, a one-to-one mapping relationship between the BPM tasks and the business processing components is completed. Therefore, based on the idea of business processing modeling, the method can model and/or decouple the business units of the distributed event-driven system, thereby realizing an effective integration of them.

It should be understood that the above general description and the following detailed description are merely exemplary and explanatory, which is not limited to the present disclosure.

### BRIEF DESCRIPTION OF THE DRAWINGS

The above and other features and advantages of the present disclosure will become more apparent by illustrating the exemplary embodiments thereof in detail with reference to the accompanying drawings.
FIG. 1 is a flowchart showing a method of business processing according to an embodiment of the present disclosure.
FIG. 2 is an exemplary diagram showing a process management container according to an embodiment of the present disclosure.
FIG. 3 is a flowchart showing a method of business processing according to another embodiment of the present disclosure.
FIG. 4 is a schematic diagram showing a loading process of a process management component according to an embodiment of the present disclosure.
FIG. 5 is a flowchart showing a method of business processing according to still another embodiment of the present disclosure.
FIG. 6 is a block diagram showing an apparatus of business processing according to an exemplary embodiment of the present disclosure.
FIG. 7 is a schematic structural diagram showing a computer system according to an exemplary embodiment of the present disclosure.
FIG. 8 is a schematic diagram showing a computer readable storage medium according to an exemplary embodiment of the present disclosure.
FIG. 9 is a block diagram showing a system of processing distributed event-driven business process according to an exemplary embodiment.

### DETAILED DESCRIPTION

Exemplary embodiments will now be described more fully with reference to the accompanying drawings. However, the exemplary embodiments can be implemented in a variety of forms, and shall not be construed as limited in the examples set forth herein. On the contrary, these embodiments are provided so that this disclosure will be more comprehensive and complete, and the concept of the exemplary embodiments may be fully conveyed to those skilled in the art. The drawings are only schematic representations of the present disclosure and are not necessarily to be drawn proportionally. The same reference numerals in the drawings represent the same or similar parts, and the repeated description thereof will be omitted.

The described features, structures or characteristics may be combined in one or more embodiments in any suitable manner. In the following description, numerous specific details are provided for thorough comprehension to the embodiments of the present disclosure. However, those skilled in the art will appreciate that the technical solutions of the present disclosure can be implemented even one or more of specific details may be omitted, or by adopting other methods, elements, devices, steps, etc. In other cases, well-known structure, method, device, implementation, material or operation are not shown or described in detail so as to avoid obscuring the respective aspects of the present disclosure.

It should be noted that the terms "first", "second" and so on in the description and claims are used for distinguishing similar items, but are not used for indicating or implying relative importance or implicitly indicating the number of indicated technical features, or describing a specific sequence or order. Thus, features defined with "first" and "second" may include one or more of features either explicitly or implicitly. In description of the present disclosure, the meaning of "a plurality" is at least two, such as two, three, etc., unless specifically defined otherwise.

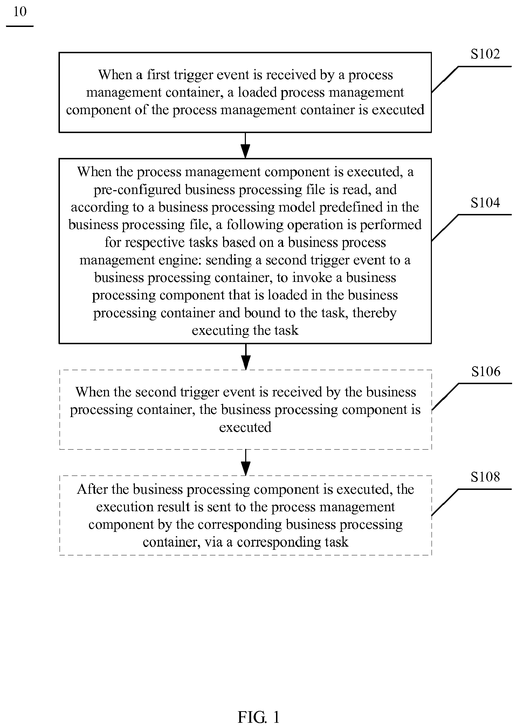

FIG. 1 is a flowchart showing a method of business processing according to an embodiment of the present disclosure.

Referring to FIG. 1, the method 10 of business processing includes following steps S102 and S104.

In step S102, when a first trigger event is received by a process management container, a loaded process management component of the process management container is executed.

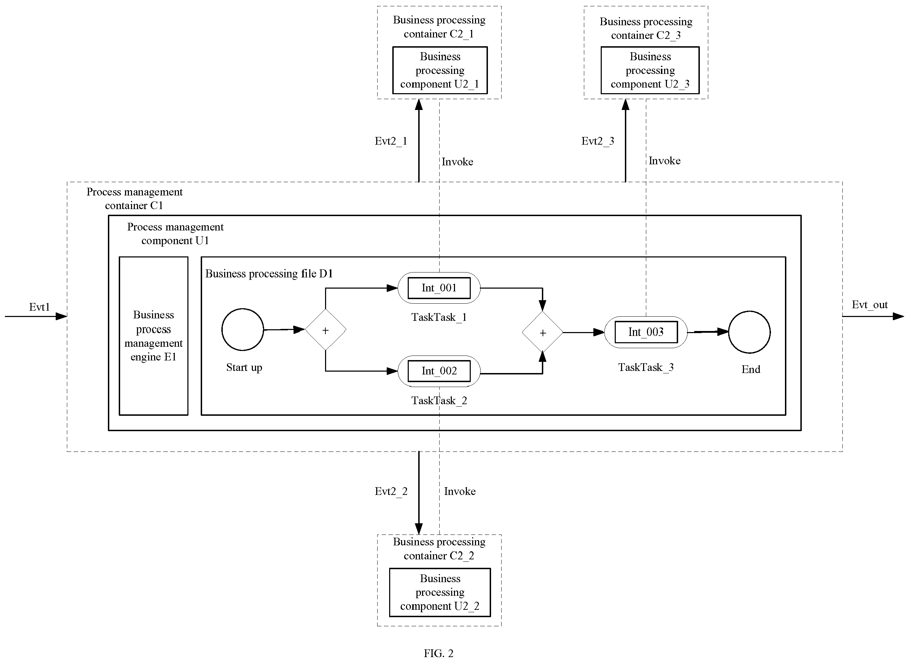

FIG. 2 is an exemplary diagram showing a process management container according to an embodiment of the present disclosure. Referring to FIG. 2, a process management component U1 is loaded in the process management container C1. Loading process of the process management component U1 will be described below. A business process management engine E1 and a pre-configured business processing file D1 are integrated in the process management component U1. When the process management container C1 receives a first trigger event Evt1, the process management component U1 is executed.

In some embodiments, the process management container C1 may receive the first trigger event Evt1 in manner of subscribing a message topic from a registration server.

In step S104, when the process management component is executed, a pre-configured business processing file is read, and according to a business processing model predefined in the business processing file, a following operation is performed for respective tasks based on a business process management engine: sending a second trigger event to a business processing container, to invoke a business processing component that is loaded in the business processing container and bound to the task, thereby executing the task.

With continued reference to FIG. 2, when the process management component U1 is invoked to be executed, the pre-configured business processing file D1 is read, the predefined business processing model is parsed therefrom, and based on the business process management engine E1, a following operation is performed for respective tasks (for example, Task_1/Task_2/Task_3) in the business processing model: sending the second trigger event Evt2_1, Evt2_2 or Evt2_3 to the business processing container C2_1, C2_2 or C2_3 to invoke the business processing component U2_1, U2_2 or U2_3 that is correspondingly loaded in the business processing container C2_1, C2_2 or C2_3 and bound to the task Task_1, Task_2 or Task_3 to be executed, thereby correspondingly executing the task Task_1, Task_2 or Task_3.

The business process management engine E1 executes the respective tasks in business process nodes according to an execution order in the business processing model. For example, when the task Task_1 is executed under the control of the business process management engine E1, the second trigger event Evt2_1 is sent to the business processing container C2_1 corresponding to the task Task_1, thereby, the business processing component U2_1 loaded in the business processing container C2_1 and bound to the task Task_1 is triggered to be executed, thereby executing the task Task_1.

Further, if the task Task_2 needs to be executed under the control of the business process management engine E1, the second trigger event Evt2_2 is sent to the business processing container C2_2 corresponding to the task Task_2, thereby the business processing component U2_2 loaded in the business processing container C2_2 and bound to the task Task_2 is triggered to be executed, thereby executing the task Task_2.

In some embodiments, the business process management engine E1 and the business processing file D1 in the process management container C1 shown in FIG. 2 may be a BPMN (Business processing modeling Notation) engine and a BPMN business processing file, respectively. BPMN is a method of describing business process in a graphical form similar to a flowchart. A business processing model is predefined in the BPMN business processing file, and the business processing model is a flowchart drawn based on the BPMN standard, that is, respective description symbols of business process conform to the BPMN standard. Examples of the flowchart may be as shown in the flowchart of the business processing file D1 in FIG. 2. In addition, since BPMN is a business process represented graphically, it is convenient for users to read. In order for a flowchart based on BPMN to be executed by a computer device, a BPMN engine is further required. The BPMN engine may interpret the business processing model so that the BPMN flowchart can be executed by the machine.

In addition, the tasks (Task_1/Task_2/Task_3) are respectively configured with interfaces to be invoked (Int_001/Int_002/Int_003). The tasks (Task_1/Task_2/Task _3) may be bound to the respective business processing components (U2_1, U2_2/U2_3) through the interfaces provided by the respective business processing components (U2_1, U2_2/U2_3) registered in a registration server, respectively. Therefore, when the respective tasks are executed, the corresponding business processing components may be executed. The process by which the respective business processing components register interfaces provided by them in the registration server will be explained below.

It should be noted that the business processing model shown in FIG. 2 is only an example and does not limit the present disclosure. The business processing model in the embodiment of the present invention may be established according to actual needs, and may include more tasks and different flow sequences.

In some embodiments, the method 10 in FIG. 1 may further include a following step S106.

In step S106, when the second trigger event is received by the business processing container, the business processing component is executed.

Referring to FIG. 2, taking the business processing container C2_1 as an example, when it receives the second trigger event Evt2_1, invocation and execution of the business processing component U2_1 that is loaded in it is triggered.

Further, in some embodiments, the method 10 in FIG. 1 may further include a following step S108.

In step S108, after the business processing component is executed, the execution result is sent to the process management component by the corresponding business processing container, via a corresponding task.

Continuingly taking the business processing component U2_1 as an example, after the business processing component U2_1 is executed, the processing result is sent to the business processing container C2_1; the business processing container C2_1 sends an event to the task Task_1; after that, the task Task_1 sends the result therein to the process management component U1, thereby the process management component U1 further performs other tasks based on the business process management engine E1.

According to the method of business processing provided by embodiments of the present disclosure, the BPM business process is integrated into the process management component, and through the configuration of the business processing file and the respective interfaces to be invoked in the respective tasks, the respective BPM tasks are bound to the respective business processing components through the interfaces to be invoked thereof, thereby, a one-to-one mapping relationship between the BPM tasks and the business processing components is completed. Therefore, based on the idea of business processing modeling, the method can model and/or decouple the business units of the distributed event-driven system, thereby realizing an effective integration of them.

It should be clearly understood that particular examples about how to make and use the present disclosure are described, but principles of the present disclosure are not limited to the details of the examples. Rather, these principles may be applied to many other embodiments based on teachings of the present disclosure.

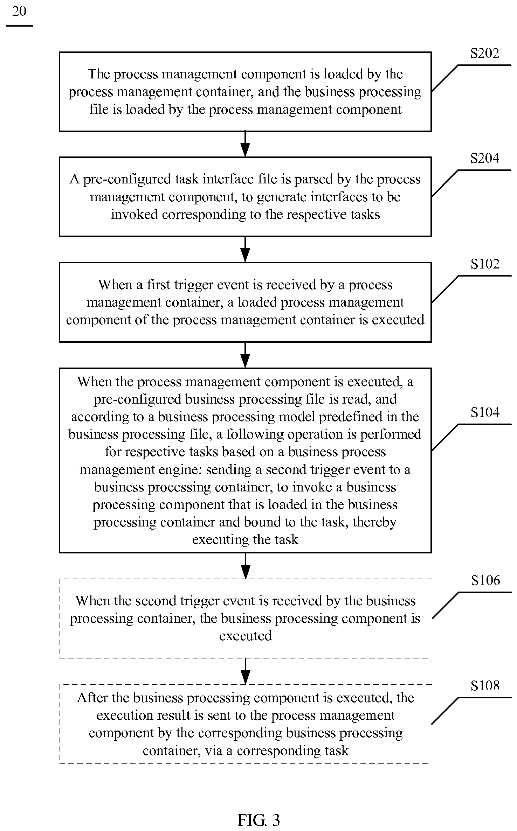

FIG. 3 is a flowchart showing a method of business processing according to another embodiment of the present disclosure.

Referring to FIG. 1 and FIG. 3 together, compared with the method 10 of business processing shown in FIG. 1, the method 20 of business processing shown in FIG. 3 further includes a following step S202.

In step S202, the process management component is loaded by the process management container, and the business processing file is loaded by the process management component.

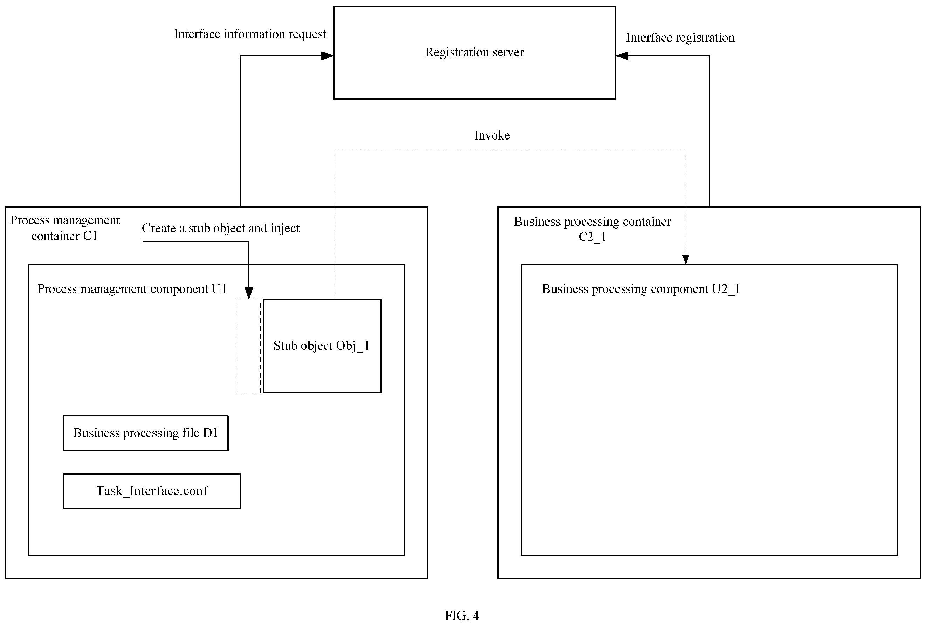

FIG. 4 is a schematic diagram showing a loading process of process management component according to an embodiment of the present disclosure. Without loss of generality, the loading process of the process management component shown in FIG. 4 is exemplified by the process management component U1, the business processing container C2_1 and the business processing component U2_1. It should be noted that the processing of the other business processing container and the business processing component in the loading process of the process management component is the same as that of the business process container C2_1 and the business processing component U2_1, and will not be repeatedly described.

Referring to FIG. 4, the business processing file D1 is loaded through the process management container C1. The predefined business processing model is configured in the business processing file D1. Further, the business process management engine that may control the execution of the business process may be formed according to the business processing model.

In step S204, a pre-configured task interface file is parsed by the process management component, to generate interfaces to be invoked corresponding to the respective tasks. The task interface file may be the file "Task_Interface.conf" in FIG. 4. By parsing the file, the interfaces to be invoked corresponding to the respective tasks may be generated (as shown by the dashed box in FIG. 4, which may be regarded as an unassigned stub object which will be described in detail below), thereby realizing binding between the respective tasks and the business processing components.

Specifically, the process management component parses the task interface file during a startup period, to generate the corresponding interfaces to be invoked. Inside the process management component, there is a program waiting for each interface to be invoked to be assigned by the process management container.

It should be noted that, in step S108, after the business processing component is executed, the business processing container sends the result to the stub object through a message queue. When the business process management engine E1 executes a task, it may invoke the corresponding stub object. When the stub object returns the result, it means that the task execution is completed, and the control returns to the business process management engine E1. When the business process management engine E1 completes execution of all tasks, the process management container obtains the execution result of the process of this time, and the control returns to the process management container.

In addition, the steps in the method 20 being the same as that in the method 10 are not repeatedly described herein.

The method of business processing according to the embodiments of the present disclosure further provides a method of loading the process management component by the process management container. In the loading process, the process management container loads the configured business processing file and the task interface file respectively, generates the interface information of respective tasks by parsing the task interface file, and then realizes the binding between the respective tasks and the corresponding business processing components according to the interface information of the respective tasks.

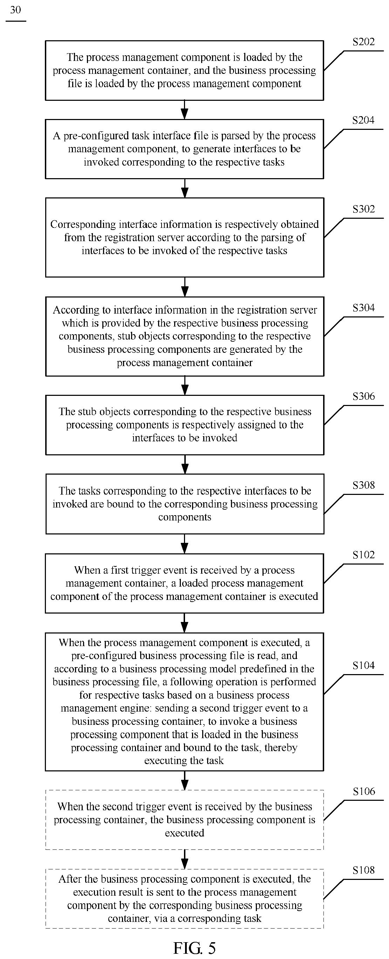

FIG. 5 is a flowchart showing a method of business processing according to still another embodiment of the present disclosure.

Referring to FIG. 5 and FIG. 3 together, the method 30 of business processing shown in FIG. 5 differs from the method 20 of business processing shown in FIG. 3 in that the method 30 may further include:

In step S302, corresponding interface information is respectively obtained from the registration server according to the parsing of interfaces to be invoked of the respective tasks.

The interface information corresponding to the interfaces to be invoked may be registered in the registration server, and the interface information may include, for example, an identifier (ID) of the business processing component that provides the interface to be invoked. The registered interfaces to be invoked of the respective tasks are searched respectively in the registration server, so that the interface information such as the ID of the business processing component that provides the interface to be invoked is found, and then returned to the process management container.

An interface registry in the registration server may include: an interface name, a message topic, and an ID of the service processing component, etc., for example, as shown in Table 1 below.

In addition, in some embodiments, before step S302, the method may further include: a business processing component to be loaded is registered to the registration server by the business processing container, so as to register the interface provided of the business processing component to the registration server.

When the business processing component as a service provider is loaded by the business processing container, the business processing container registers it in the registration server. In addition to registering the interface provided by the business processing component, the registration server may dynamically allocate a message topic for it. In addition to initializing the business processing component, the business processing container may further subscribe the message topic from the registration server.

In step S304, according to interface information in the registration server which is provided by the respective business processing components, stub objects corresponding to the respective business processing components are generated by the process management container.

When the process management component, as a service consumer, is loaded by the process management container, the process management container may dynamically generate stub objects for the business processing components, according to the interface information of the interfaces to be invoked by the respective tasks, returned from the registration server.

In step S306, the stub objects corresponding to the respective business processing components is respectively assigned to the interfaces to be invoked.

Referring to FIG. 4, the process management container C1 dynamically generates a stub object Obj_1 for the business processing component U2_1, and assigns the stub object Obj_1 to the corresponding interface to be invoked. Referring to FIG. 2, in the same manner, in the loading process of the process management component U1, the process management container C1 dynamically generates the respective stub objects for the business processing component U2_2 and the business processing component U2_3 respectively, and assigns them to the corresponding interfaces to be invoked.

In step S308, the tasks corresponding to the respective interfaces to be invoked are bound to the corresponding business processing components.

For example, referring to FIG. 2 and FIG. 4 together, the stub object Obj_1 of the business processing component U2_1 is assigned to the interface to be invoked Int_001, and then the task Task_1 corresponding to the interface to be invoked Int_001 is bound to the business processing component U2_1 corresponding to Int_001.

When the process management component U1 executes the task Task_1, it invokes the business processing component U2_1 that provides the interface Int_001, and the invocation is intercepted by the stub object Obj_1 corresponding to the business processing component U2_1, and the stub object Obj_1 converts this invocation into a message, and sends it to the message topic corresponding to the interface, so that the business processing container C2_1 receives the second trigger event Evt2_1, that is, according to the stub object Obj_1, the second trigger event Evt2_1 is sent to the business processing container C2_1.

Specifically, since the stub object realizes the invocation of the business processing component, when it is assigned to the interface to be invoked, the process management component completes the binding of the interface to be invoked with the task, so that the binding among the task, the interface to be invoked, the stub object and the business processing component is finally completed.

In addition, the message topic subscribed by the business processing container is used to bind the respective business processing components with their corresponding stub objects. In a specific implementation, when the stub object sends a message, the message topic to be returned may be pre-configured in advance in the message.

Further, referring to FIG. 2, the process management component U1 may send an output event Evt_out as a trigger event of other component units, after executing all the tasks (Task_1/Task_2/Task_3) under the control of the business process management engine E1.

**Table 1 is the interface registry in the registration server according to an example.**

| Interface Name | Message topic | Business processing component ID |
|---|---|---|
| com.del | int_001 | U2_1 |

With respect to an interface provided by a business processing component, the registration server respectively registers the corresponding message topic (for example, represented by an interface ID) and the business processing component identifier for the interface, so that, when the interface is invoked, it may be associated with the business processing component that provides it and the message topic that is assigned for the business processing component.

It should be noted as well that, in step S108, after the business processing component is executed, the business processing container may send the result to the stub object through a message queue. When the business process management engine E1 executes the task, it may invoke the corresponding stub object. When the stub object returns the result, it means that the task execution is completed, and the control returns to the business process management engine E1. When the business process management engine E1 completes execution of all tasks, the process management container obtains the execution result of the process of this time, and the control returns to the process management container.

In addition, the steps in the method 30 being the same as that in the method 20 are not repeatedly described herein.

It shall be noted that, in some embodiments, the process management component and the business processing component in the respective foregoing methods 10, 20 and 30 may be configured in a distributed event-driven system. That is, the process management component and at least one business processing component are distributed to the respective processing nodes in the distributed event-driven system. The respective processing node may be physical processing nodes or virtual processing nodes in a distributed event-driven system.

In addition, in above respective methods 10, 20 and 30, it is further possible to inherit the characteristics such as timers and exception handlings in the existing Business Process Management (BPM), thereby making up for the defects that it is difficult to realize such functions in the distributed event-driven system.

Those skilled in the art will understand that all or a portion of the steps to realize the above described embodiments may be realized as a computer program executed by a CPU. When the computer program is executed by the CPU, the above described functions defined by the above described methods provided by the present disclosure may be performed. The program may be stored in a computer readable storage medium, which may be a read only memory, a magnetic disk or an optical disk, or the like.

Further, it shall be noted that the above described drawings are merely illustrative of the processes included in the method according to the exemplary embodiments of the present disclosure, and are not intended to limit. It is easy to understand that the processing shown in the above drawings does not indicate or limit the chronological order of these processes. In addition, it is easy to understand as well that these processes may be performed synchronously or asynchronously, for example, in a plurality of modules.

The following is apparatus embodiments of the present disclosure, which may be used to carry out the method embodiments of the present disclosure. For details not disclosed in the apparatus embodiments of the present disclosure, please refer to the method embodiments of the present disclosure.

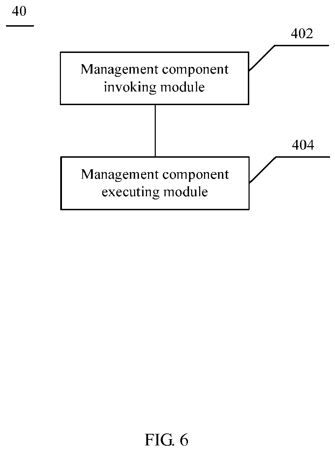

FIG. 6 is a block diagram showing an apparatus of business processing according to an exemplary embodiment.

Referring to FIG. 6, the business process processing apparatus 40 includes a management component invoking module 402 and a management component executing module 404.

The management component invoking module 402 is configured to, when a first trigger event is received through a process management container, execute a loaded process management component in the process management container.

The management component executing module 404 is configured to, when the process management component is executed, read a pre-configured business processing file, and according to a business processing model predefined in the business processing file, perform following operations for respective tasks: sending a second trigger event to a business processing container, to invoke a business processing component that is loaded in the business processing container and bound to the task, thereby executing the task.

In some embodiments, the apparatus 40 further includes: an interface file parsing module, configured to parse a pre-configured interface file of respective tasks by the process management container, to generate interfaces to be invoked of respective tasks.

In some embodiments, the apparatus 40 further includes: an interface information registering module, configured to register a business processing component to be loaded to the registration server through the business processing container, so as to register the interface provided by the business processing component to the registration server.

In some embodiments, the apparatus 40 further includes: a stub object generating module, a stub object assigning module and an interface component binding module. The stub object generating module is configured to, according to interface information in the registration server which is provided by the respective business processing components, generate stub objects corresponding to the respective business processing components by the process management container. The stub object assigning module is configured to respectively assign the stub objects corresponding to the respective business processing components to the corresponding interfaces to be invoked. The interface component binding module is configured to bind the tasks corresponding to the respective interfaces to be invoked with the corresponding business processing components.

In some embodiments, the apparatus 40 may further include: a message topic subscribing module, configured to receive and subscribe, through the business processing container, a message topic dynamically allocated for the business processing container by the registration server, wherein the message topic is used to bind the respective business processing components with the stub objects corresponding to the respective business processing components.

In some embodiments, the apparatus 40 may further include: a processing component executing module, configured to, when the second trigger event is received by the business processing container, execute the business processing component.

According to the apparatus of business processing provided by embodiments of the present disclosure, the BPM is integrated into the process management component, and through the configuration of the business processing file and the respective interfaces to be invoked of the respective tasks, the respective BPM tasks are bound to the respective business processing components through the interfaces to be invoked thereof, and a one-to-one mapping relationship between the BPM tasks and the business processing components is completed. Therefore, based on the idea of business processing modeling, the apparatus can model and/or decouple the business units of the distributed event-driven system, thereby realizing an effective integration of them.

It shall be noted that the block diagrams shown in the above drawings are functional entities and do not necessarily have to correspond to physically or logically independent entities. These functional entities may be realized by software, or by one or more hardware modules or integrated circuits, or by different networks and/or processor devices and/or microcontroller devices.

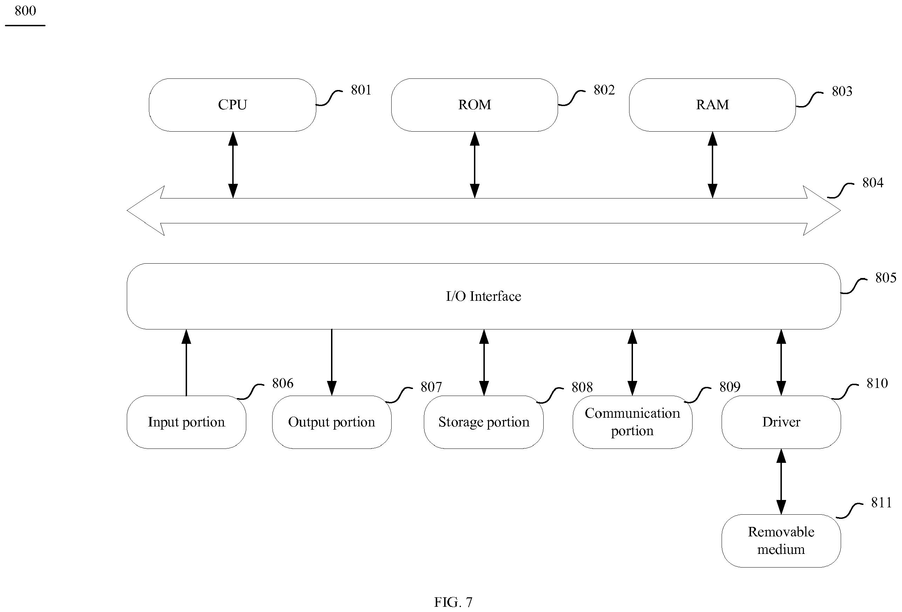

FIG. 7 is a schematic structural diagram showing a computer system according to an exemplary embodiment.

It shall be noted that the computer system shown in FIG. 7 is only an example, and shall not impose any limitation on the functions and scope of use of the embodiments of the present disclosure.

Referring to FIG. 7, a computer system 800 includes a Central Processing Unit (CPU) 801 that may execute a variety of appropriate actions and processes according to a program stored in Read Only Memory (ROM) 802 or a program loaded from Random Access Memory (RAM) 803 from storage portion 808. In the RAM 803, various programs and data required for the operation of the system 800 are stored as well. The CPU 801, the ROM 802, and the RAM 803 are connected to each other through a bus 804. An input/output (I/O) interface 805 is coupled to bus 804 as well.

The following components are connected to the I/O interface 805: an input portion 806 including a keyboard, a mouse, etc.; an output portion 807 including, such as a Cathode Ray Tube (CRT), a Liquid Crystal Display (LCD), a speaker, and the like; a storage portion 808 including a hard disk or the like; and a communication portion 809 including a network interface card such as a LAN card, a modem, or the like. The communication section 809 performs communication processing via a network such as the Internet. A driver 810 is as well coupled to I/O interface 805 as needed. A removable medium 811, such as a magnetic disk, an optical disk, a magneto-optical disk, a semiconductor memory or the like, is mounted on the drive 810 as needed such that a computer program read therefrom is installed into the storage portion 808 as needed.

In particular, according to the embodiments of the present disclosure, the processes described above with reference to flowcharts of FIGs. 1-5 may be implemented as computer software programs. For example, the embodiments of the present disclosure includes a computer program product including a computer program carried on a computer readable medium, and the computer program includes program codes for performing the method illustrated in the above flowcharts. In such embodiments, the computer program may be downloaded and installed from the network via the communication portion 809, and/or installed from the removable media 811. When the computer program is executed by the Central Processing Unit (CPU) 801, the above described functions defined in the system of the present disclosure are performed.

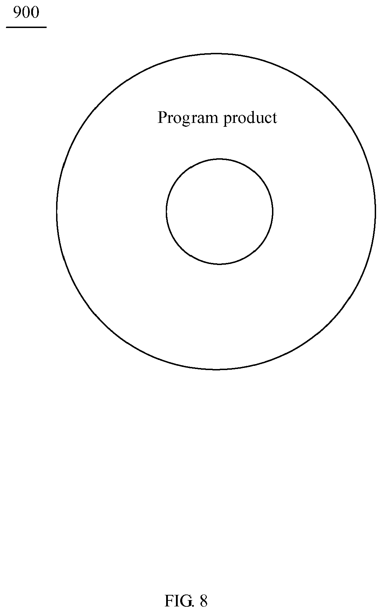

FIG. 8 is a schematic diagram showing a computer readable storage medium according to an exemplary embodiment.

Referring to FIG. 8, a program product 900 arranged to realize the above methods is described according to the embodiments of the present disclosure, which may be a portable Compact Disk Read Only Memory (CD-ROM) and include program codes and may be run on a terminal device such as a personal computer. However, the program product of the present disclosure is not limited thereto, and in the present document, the readable storage medium may be any tangible medium containing or storing a program that may be used by or in connection with an instruction execution system, apparatus or device.

The computer readable medium carries one or more programs that, when executed by one of the devices, causes the computer readable medium to realize the following functions.
when a first trigger event is received by a process management container, a loaded process management component of the process management container is executed; and
when the process management component is executed, a pre-configured business processing file is read, and according to a business processing model predefined in the business processing file, and based on a business process management engine, a following operation is performed for respective tasks in the business processing model respectively: sending a second trigger event to a business processing container, to invoke a business processing component that is loaded in the business processing container and bound to the task, thereby executing the task.

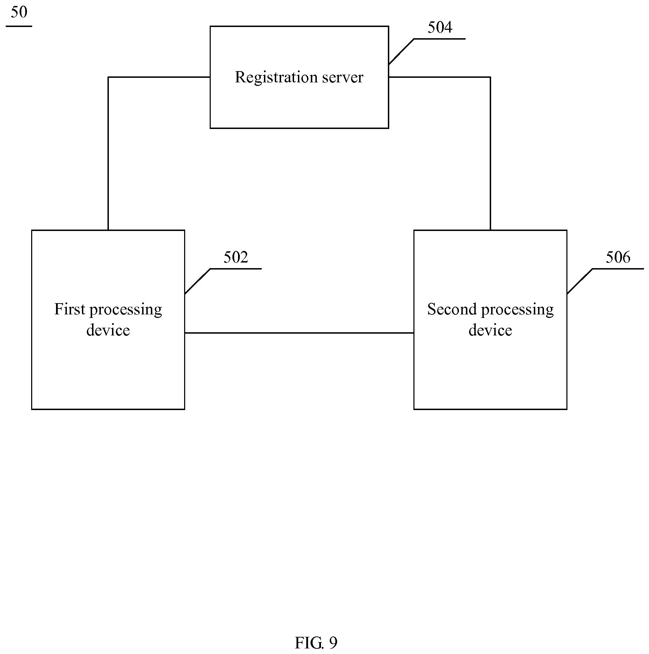

FIG. 9 is a block diagram showing a system of processing distributed event-driven business process according to an exemplary embodiment.

Referring to FIG. 9, a system 50 includes a first processing device 502. The structure of the first processing device 502 may be referred to by the computer system shown in FIG. 8, and includes: a memory, a processor and executable instructions stored in the memory and being executable in the processor. When the processor executes the executable instructions, the first processing device 502 may realize steps S102-S104 in the method 10 shown in FIG. 1, or realize steps S202-S104 in the method 20 shown in FIG. 2.

Further, the system 50 may further include: a registration server 504, configured to make the business processing component realize registration of interfaces provided by the business processing component in the respective foregoing methods. When the processor of the first processing device 502 executes the executable instructions, the first processing device 502 may realize steps S302-S104 in the method 30 as shown in FIG. 5 as well.

In addition, the system 50 may further include at least one second processing device 506. The structure of the second processing device 506 may be referred to by the computer system as shown in FIG. 8, including: a memory, a processor and executable instructions stored in the memory and being executable in the processor. In the above respective methods 10, 20 and 30, the respective business processing containers thereof may be configured in at least one second processing device 506 such that, when the processor executes the executable instructions, the second processing device 506 may realize the operations performed by the business processing containers in the above respective methods.

In the system of processing distributed event-driven business process of the present disclosure, the process management container and the business processing container are distributed among the respective business processing nodes of the system. Therefore, the distributed event-driven system applies the principles of Business Process Management (BPM) to model and decouple its business units, thereby realizing the effective integration of business processing modeling and event-driven modeling.

The exemplary embodiments of the present disclosure have been particularly shown and described above. It shall be understood that the present disclosure is not limited to the detailed structures, arrangements or implementations described herein; rather, the disclosure is to cover various modifications and equivalents within the spirit and range of the appended claims.

## Claims

1. A method of business processing, comprising:
when a first trigger event is received by a process management container, executing (S102) a process management component loaded in the process management container; and
when the process management component is executed, reading (S104) a pre-configured business processing file, and according to a business processing model predefined in the business processing file, performing an operation for respective tasks in the business processing model based on a business process management engine, wherein the operation includes: sending a second trigger event to a business processing container, to invoke a business processing component that is loaded in the business processing container and bound to the task.

2. The method according to claim 1, further comprising:
parsing (S204) a pre-configured task interface file by the process management component, to generate interfaces to be invoked corresponding to the respective tasks.

3. The method according to claim 2, further comprising:
registering, by the business processing container, a business processing component to be loaded to a registration server, so as to register the interface provided by the business processing component to the registration server.

4. The method according to claim 3, further comprising:
according to interface information in the registration server which is provided by the respective business processing components, generating (S304) stub objects corresponding to the respective business processing components by the process management container;
respectively assigning (S306), by the process management container, the stub objects corresponding to the respective business processing components to the corresponding interfaces to be invoked; and
binding (S308), by the process management component, the tasks corresponding to the respective interfaces to be invoked with the corresponding business processing components.

5. The method according to claim 4, further comprising:
when the second trigger event is received by the business processing container, executing (S106) the business processing component.

6. The method according to claim 5, further comprising:
after the business processing component is executed, sending (S108), by the business processing container, an execution result to the stub object.

7. The method according to any one of claims 3-6, further comprising:
receiving and subscribing, by the business processing container, a message topic dynamically allocated for the business processing container by the registration server,
wherein the message topic is used to bind the respective business processing components with the stub objects corresponding to the respective business processing components.

8. The method according to claim 1, wherein the process management component and the business processing components are configured in a distributed event-driven system.

9. An apparatus of business processing, comprising: a memory, a processor and executable instructions stored in the memory and being executable in the processor, wherein the processor is configured to:
when a first trigger event is received by a process management container, execute a process management component loaded in the process management container; and
when the process management component is executed, reading a pre-configured business processing file, and according to a business processing model predefined in the business processing file, performing an operation for respective tasks in the business processing model based on a business process management engine,, wherein the operation includes: sending a second trigger event to a business processing container, to invoke a business processing component that is loaded in the business processing container and bound to the task.

10. A computer program product stored on a computer usable medium, comprising computer-readable program means for causing an apparatus of business processing to implement the method according to any one of claims 1 to 8.
